Europäisches Patentamt

European Patent Office

Office européen des brevets

(19)

(11) Publication number: **0 017 686**
**B1**

# EUROPEAN PATENT SPECIFICATION

(45) Date of publication of patent specification: **05.10.83**

(51) Int. Cl.³: **B 28 B 3/20, B 23 P 15/16**

(21) Application number: **79302681.6**

(22) Date of filing: **23.11.79**

(54) **Method of producing a die for extruding a ceramic batch into a honeycomb structural body and a die produced by such method.**

(30) Priority: **21.04.79 JP 49219/79**

(43) Date of publication of application:
**29.10.80 Bulletin 80/22**

(45) Publication of the grant of the patent:
**05.10.83 Bulletin 83/40**

(84) Designated Contracting States:
**BE DE FR GB IT**

(56) References cited:
**NL - A - 6 813 245**
**US - A - 3 930 522**

(73) Proprietor: **NGK INSULATORS, LTD.**
**2-56, Suda-cho, Mizuho-ku**
**Nagoya-shi, Aichi 467 (JP)**

(72) Inventor: **Ihara, Masahiro**
**No. 34, 1-chome**
**Takemi-cho Mizuho-ku, Nagoya-city, 467 (JP)**

(74) Representative: **Haigh, Charles Roy et al,**
**J.A. KEMP & CO. 14 South Square Gray's Inn**
**London WC1R 5EU (GB)**

Method of producing a die for extruding a ceramic batch into a honeycomb structural body
and a die produced by such method

The present invention relates to a method of producing a die for extruding a ceramic batch into a honeycomb structural body.

There are known ceramic honeycomb structural bodies having a large number of parallel cells, which are defined by relatively thin lattice-like partition walls and extend axially through the body which has, as a result, an open frontal area of about 60—90%, preferably 65—85%. Such bodies have been used as catalyst carriers for the purpose of purifying harmful CO, HC and $NO_x$ from exhaust gases by passing the exhaust gases through the cells so as to react with a catalyst supported on the surfaces of the partition walls. The honeycomb structural body is manufactured by a method wherein a ceramic batch is extruded through an extrusion die into a ceramic honeycomb shaped body, and the shaped body is dried and fired, as described in U.S. Patent Specification No. 3,824,196.

When the above described ceramic honeycomb structural body having a catalyst supported on the partition wall of the cell is used for purifying harmful gases from an exhaust gas, the exhaust gas is passed through the honeycomb structural body so as to react the exhaust gas with the catalyst. Therefore, the reaction area must be large and the pressure loss of the exhaust gas must be low. In order to increase the reaction area of the honeycomb structural body within the limited volume of an exhaust gas purifying apparatus, the thickness of the partition walls should be as small as possible. If the dimension between adjacent partition walls is decreased without changing the thicknesses of the walls, in order to increase the cell density, a large reaction area is obtained, but the pressure loss in the exhaust gas passing therethrough becomes high, and the use of such a honeycomb structural body is disadvantageous. A honeycomb structural body having thin partition walls can be obtained by the use of an extrusion die having a small slit width. However, the slits of such an extrusion die have hitherto been produced by abrasion machining with the aid of a grinder, or by milling or by electric discharge machining. The limiting lower slit width which can be formed by the above described process for slits of a given depth, is as large as about 0.30 mm. The production of slits having a width smaller than 0.3 mm is very difficult using the production accuracy of the grinder, milling blade and discharge electrode and due to the machining accuracy when the slits are formed by the use of these tools.

Further, Japanese Examined Patent Publication No. 20,435/76 discloses a honeycomb structural body having round corners at the intersections of partition walls, and that this assists the efficiency of the catalyst. The round shape beneficially affects exhaust flow, improves catalyst reaction efficiency, increases the strength of the honeycomb bodies and reduces the amount of catalyst required. Such a honeycomb structural body is produced by the use of an extrusion die which is rounded at the corners between its lattice-like slits, which rounded corners are formed by roundimg off the crossing corners of the lattice-like slits using cutting machining or electric discharge machining. However, in this method, where the formation of slits having a width of as little as about 0.3 mm is difficult, and when it is intended to form slits having a width smaller than 0.3 mm, it is even more difficult to insert into the slits a cutting tool for rounding off the crossing corners of the lattice-like slits of the die and to manufacture accurately a discharge electrode having a small round portion.

As the result, in the above described method, it is difficult to form partition walls having a thickness of smaller than 0.3 mm between adjacent cells and also difficult to round off the crossing corners of the partition walls. Therefore, it is impossible to make satisfactorily the die for making the ceramic structure having a large catalytic reaction area which allows the exhaust gas to flow smoothly. For example, when the honeycomb structural body produced by the above described method is used as a catalyst carrier in the purification of the exhaust gas of an automobile, the honeycomb structural body is large in weight, and the catalyst requires a long time to be raised in temperature at the starting of engine, and the exhaust gas can not be sufficiently purified during the starting of the engine.

Even with precision machining, the dimensional accuracy of the slit width is only about 10% due to working error. For example, when it is intended to produce slits having a width of 0.3 mm, slits having a width of about 0.27—0.33 mm are obtained. When this tolerance is not accepted in practice, the extrusion die must be discarded. Further, when a slit having a width of 0.33 mm is obtained, and the upper limit of the slit width is 0.35 mm, only a very small amount of honeycomb structural body can be extruded until the width 0.33 mm of the slit becomes 0.35 mm due to abrasion of the slit.

According to U.S. Patent No. 3,930,522, column 6, lines 56—58 and U.S. Patent No. 4,021,134, column 5, lines 46—50 a die for extruding a honeycomb structural body is subjected to electroless nickel plating. However, these U.S. Patents only aim to prevent the rusting of the die and to decrease the friction coefficient between the die and the ceramic batch. The nickel plating thickness is very small.

According to the present invention there is provided a method of producing a die for extruding a ceramic honeycomb structural body, including the steps of forming a lattice of slits having a given depth in the front surface of the matrix of the die in a shape substantially corresponding to the geometrical shape of a ceramic honeycomb structural body to be extruded, and forming plurality of independent inlets for feeding a ceramic batch communicating with the slits in the rear surface of the matrix and forming a metal film on the surface at least of the slits by electroless nickel plating, characterised in that the wall thickness and the radius of the rounded corners between adjacent walls of the body to be produced in use of the die are selected, the slits are machined to a width equal to the selected wall thickness plus twice the selected radius, and the electroless nickel plating is conducted so as to deposit a metal layer of a thicknness equal to the selected radius, which metal layer thereby reduces the slits to the selected width and provides the correct radius at the corners.

The present invention therefore provides, simultaneously, several desirable features. Each of these features has only previously been proposed independently of the other, if at all, and each is more easily and accurately provided with the present invention than in the prior art. Thus, the invention allows provision of rounded corners in a much better way, by utilising the realisation of the fact that rounded corners arise on plating, and that their radius can be controlled by controlling plating thickness. The rounded corners arise due to the deposition growing perpendicular to the base surface. Electroless nickel plating is used rather than electroplating because its conditions leading to uniformity are much easier to control. Again, the invention proposes using such thicknesses of plating as allow good control and adjustment of the slit width without initial cutting of the slits having to be so narrow as previously. In other words, by selecting desired corner radius, and desired slit width, and working from the fact that corner radius will equal deposition thickness, it is possible to calculate the width to which the slits need initially to be cut and such width is likely to be easy to achieve.

With the slit width being controlled by the thickness of the plating metal film, slits having a width smaller than the width of slits formed by conventional methods can be obtained in a very simple process. Rounded corners are also provided. The simultaneous provision of these features, each improved relative to their individual provision in the prior art, is a notable feature of this invention.

Even if a slit having the desired width may be obtained by electroless nickel plating, the plated nickel film is poor in the abrasion resistance so that the dimensions will not long be maintained. Preferably, therefore, the electroless nickel plating is an electroless nickel-phosphorus alloy plating. Preferably, also, the plated metal film is heat treated at a temperature of 400—500°C. According to these preferred features, therefore it can be avoided that the slit is worn by a small amount of extrusion of ceramic batch, as a result of which the slit width becomes larger than the selected width, and the die can not be used for the production of honeycomb structural bodies. Of course, nickel films, having a thickness of about 0.01—0.05 mm, which are commonly used for the purpose of the prevention of rusting and the lowering of friction coefficient, are worn and lost rapidly due to abrasion by ceramic batches, and can not attain the above described objects.

The invention will be more clearly understood from the following description which is given by way of example with reference to the accompanying drawings in which:

Figure 1 is a vertical sectional view of the matrix of an extrusion die;

Figure 2 is a plan view of the matrix of the die shown in Figure 1;

Figure 3 is an enlarged vertical sectional view of a part of an extrusion die according to the present invention; and

Figure 4 is an enlarged horizontal sectional view of the die shown in Figure 3 taken along a line IV—IV in Figure 3.

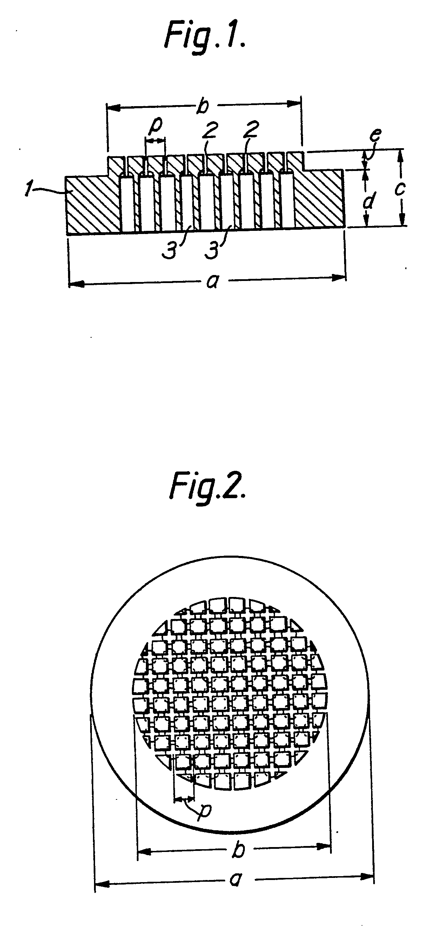

In Figures 1—4, the numeral 1 represents a matrix of an extrusion die manufactured by conventional mechanical machining or electric discharge machining, which is provided at its front surface with slits 2 at right angles to each other and bored up to a given depth in the matrix towards its rear surface. At its rear surface the matrix has a large number of feed inlets 3 for a ceramic batch, which have a circular cross-sectional shape and are uniformly bored in the matrix towards its front surface communicate to the slits 2 so as to supply the ceramic batch into the slits 2. The widths of the slits 2 formed in the matrix are measured by means of a measuring instrument, such as a projector. A method film 4 having a thickness of $(i—i')/2$, wherein $i$ represents the measured with of the above formed slit 2 and $i'$ represents the desired width of slit, is formed by plating on the surface of the slit 2 only or also on the area from the surface of the slit 2 to the surface of the feed inlet 3 for ceramic batch. When a curve showing the relation between plating time and the plated metal thickness is previously determined, the metal film 4 having a given thickness can be easily obtained by plating in an accurately controlled plating bath for a time calculated from the curve.

Alternatively, the metal film 4 having a given thickness can be formed in the following manner. The matrix 1 and a test piece made of the same steel as the matrix 1 are immersed in a plating bath, the test piece is taken out from the bath at intervals and the thickness of the metal film plated on the test piece is measured. When the thickness of the metal film has reached the given thickness, the plating of metal on the matrix 1 is stopped.

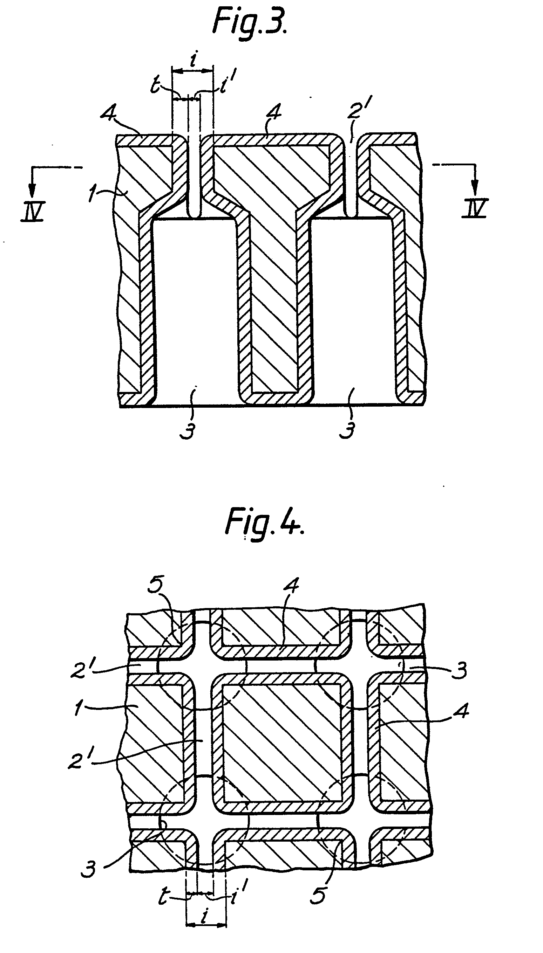

The metal film 4 formed on the surface of at least the slit 2 of the matrix 1 may be heat treated in a conventional process in order to increase the abrasion resistance. Particularly, when a nickel layer is as in the invention, the nickel film may be poor in abrasion resistance. Therefore, it is preferred for the amount of hypophosphorous acid ions and nickel ions in the plating bath to be properly adjusted so as to form a nickel-phosphorous alloy film (Ni: 91—92%, P: 8—9%), which composition has a higher abrasion resistance against ceramic batches, and further it is also preferred for the resulting nickel-phosphorus alloy film to be heat treated at 400—500°C. The applicants have found that the above obtained nickel-phosphorus alloy film has an abrasion resistance against ceramic batches as high as about 5 times that of nickel films having a conventional composition without heat treatment or even with a heat treatment at 600—700°C, which is considered to be most effective for improving the abrasion resistance of nickel film. That is, in this preferred method, the durability of the plated extrusion die is much improved, and the plated die can be used for some time for the production of honeycomb structural bodies. Moreover, the slit 2 of the above described matrix 1, which has been manufactured by a conventional method, is not round at the corners 5 between the slits similarly to a conventional matrix as shown in Figure 4. However, when a metal film 4 is plated in the slit 2, the surface of the metal film 4 at the crossing corners 5 of the slits takes on a round shape having a radius of curvature, the value of which is equal to the thickness of the metal film 4.

In the extrusion die produced in the above described method, the thickness of the metal film 4 formed on the surface of the slit 2 arranged in the front surface of the matrix 1 is controlled very accurately to a uniform thickness of (i—i')/2, wherein i represents the width of the slit 2 and i' represents the intended width of slit 2'. Therefore, a ceramic batch supplied into the slits 2' through the feed inlets 3, which are arranged in the rear surface side of the die and communicated to the slits 2', can be extruded through the slits 2' into a honeycomb structural body, with walls between adjacent cells having a uniform thickness. Moreover, the above described slit 2' of the die is not directly formed by a mechanical machining or an electric discharge machining, but is formed so as to have its given width by plating to a necessary thickness with a metal film 4 on the slit 2 of a matrix 1 manufactured by a conventional method. Therefore, slit widths less than 0.3 mm can easily be obtained in a high accuracy. Accordingly, honeycomb structural bodies, with walls between adjacent cells having any desired thickness, e.g. less than 0.3 mm, can be produced, and a catalyst carrier, which has very thin partition walls having a desired thickness between adjacent cells, can also be obtained by firing the honeycomb structural body. That is, when the honeycomb structural body is used as an exhaust gas purifying apparatus, the cell density can be enhanced to the extreme value of honeycomb structure without increasing the pressure loss of the exhausted gas. Therefore, a large reaction area can be obtained in a limited volume of exhaust gas-purifying apparatus. Further, the honeycomb structural body is small in the weight as a carrier for catalysts for pourifying exhaust gases of automobiles and does not require a long temperature-raising time at start-up of an engine. Accordingly, the catalyst supported on the honeycomb structural body can be used advantageously in the purification of exhaust gas.

In the present invention, an extrusion die having slits, whose crossing corners have a round shape formed by plating the metal film 4 on the surface of the crossing corners 5 of the slits 2 of the matrix 1, is used. Therefore, a honeycomb structural catalyst carrier extruded from the die has a round shape at the crossing corner of the partition walls and when the catalyst carrier is used, exhaust gas flows smoothly and the reaction efficiency of the catalyst is high.

As described above, the present invention has solved some of the drawbacks of dies produced by the conventional mechanical machining or electrical discharge machining and used for extruding honeycomb structural bodies, and the extrusion die of the present invention is very valuable for industrial purposes.

The following Examples are given for the purpose of illustration of this invention and are not intended as limitations thereof.

Example 1

As illustrated in Figures 1—4, feed inlets 3 for ceramic batch, which have a diameter of 2 mm and a depth of 35 mm, were formed in the rear surface of a steel sheet (Diameter a: 120 mm, diameter b of slit portion: 60 mm, thickness c: 40 mm, thickness d of feed inlet portion: 35 mm and thickness e of slit portion: 5 mm) by a drill at a pitch P of 3 mm, and then the steel sheet was subjected to an electric discharge machining for the purpose of forming slits 2 having a width i of 0.32 mm and depth of 5 mm in the front surface of the steel sheets at a pitch P of 3 mm, whereby a matrix 1 was obtained. The width of the slits 2 in the matrix 1 was measured by means of a projector and ascertained to be 0.33 mm. When the desired slit width is 0.15 mm, for instance, the thickness of metal film 4 to be placed is calculated as (0.33 mm—0.15 mm)÷2=0.09 mm. Therefore, a nickel-phosphorus alloy film having a thickness of 0.09 mm was formed on the area including the surface of the slits 2 and extending to the surface of the feed inlets 3 for the ceramic batch by the electroless nickel plating. From a previously prepared curve showing the relation between plating time and metal film thickness by the use of an electroless plating bath having a nickel concentration of 6.2 g/l and a pH of 4.3 and kept at 88°C, it was ascertained that a nickel phosphorus alloy film having a thickness of 0.09 mm could be obtained by carrying out electroless plating in the bath for 495 minutes. Thus, the above described nickel plating of the nickel-phosphorus alloy film 4 was carried out in the above described plating bath kept at 88°C for that time and the resulting nickel-phosphorus alloy film 4 having a thickness t of 0.09 mm was subjected to heat treatment, wherein the film 4 was heated up to 450°C for 1 hour, kept at 450°C for 3 hours and then cooled in air. The desired extrusion die, with slits 2' of a width i' of 0.15 mm, was produced. When a catalyst carrier produced by the use of the above obtained extrusion die was compared with a catalyst carrier produced by the use of a conventional extrusion die having a slit width of about 0.3 mm and the same reaction area as that of the former carrier, it was ascertained that the former carrier was about 35% smaller in the weight than the latter carrier and further the former carrier is smaller in size and is lower in heat capacity and in fuel cost than the latter carrier.

Example 2

In the same manner as in Example 1, a matrix 1 having slits 2 of 0.492 mm width (i) and not having a round shape at the corners 5 between the slits 2 was produced. A nickel-phosphorus alloy film 4 having a thickness (t) of 0.094 mm was formed on the surface of the slits 2 to produce an extrusion die having slits 2' of 0.304 mm width (i') and having a round shape, which had a radius of 0.094 mm at the corners between the slits 2'. A catalyst carrier produced by the use of the resulting extrusion die had a round shape having a radius of 0.094 mm at the corners between the partition walls, and was higher than the conventional catalyst carrier in catalyst reaction efficiency.

Example 3

As described in Example 1, a matrix 1 having slits 2 of 0.402 mm width (i) and not having a round shape at the crossing corners 5 of the slits 2 was produced, and a nickel-phosphorus alloy film 4 having a thickness (t) of 0.158 mm was formed on the surface of the slits 2 to produce an extrusion die having slits 2' of 0.086 mm width (i') and having a round shape, which had a radius of 0.158 mm at the crossing corners of the slits 2'. Therefore, according to the present invention, an extrusion die having a very small slit width and further having a round shape at the corners between such thin slits could be easily obtained. It had hitherto been considered to be impossible to produce slits having the above described small width and to work in the corners of slits so as to give them a round form. The honeycomb structural body produced by the use of the above obtained extrusion die had excellent properties as described in both Examples 1 and 2.

Example 4

As described in Example 1, five matrices 1 having slits 2 of 0.3 mm target width i were produced, and nickel-phosphorus film 4 having a variant thickness was formed on the surface of the slits 2 corresponding to the above obtained actual width i of the slit 2 in each matrix 1 so that the resulting slits 2' would have a target width i' of 0.15 mm. The obtained results are shown in the following table. It can be seen from the table that the variance of the slit width in the die of the present invention is smaller than the variance of the slit width in the matrix.

| Sample no. | Slit width i in the matrix (mm) (target width: 0.3 mm) | Thickness t of Ni-P alloy film (mm) | Slit width i' in the die of the present invention (mm) (target width: 0.15 mm) |
|---|---|---|---|
| 1 | 0.306 | 0.077 | 0.152 |
| 2 | 0.281 | 0.067 | 0.147 |
| 3 | 0.314 | 0.081 | 0.152 |
| 4 | 0.327 | 0.090 | 0.147 |
| 5 | 0.293 | 0.072 | 0.149 |

Claims

1. A method of producing a die for extruding a ceramic honeycomb structural body, including the steps of forming a lattice of slits (21) having a given depth (e) in the front surface of the matrix (1) of the die in a shape substantially corresponding to the geometrical shape of a ceramic honeycomb structural body to be extruded, and forming a plurality of independent inlets (3) for feeding a ceramic batch communicating with the slits (2') in the rear surface of the matrix (1), and forming a metal film (4) on the surface of at least the slits (2') by electroless nickel plating, characterised in that the wall thickness and the radius of the rounded corners between adjacent walls of the body to be produced in use of the die are selected, the slits are machined to a width (i) equal to the selected wall thickness (i') plus twice the selected radius, and the electroless nickel plating is conducted so as to deposit a metal layer of a thickness (t) equal to the selected radius, which metal layer thereby reduces the slits (2') to the selected width and provides the correct radius at the corners.

2. A method according to claim 1, characterised in that said electroless nickel plating is an electroless nickel-phosphorus alloy plating.

3. A method according to claim 2, characterised in that the plated metal film is heat treated at a temperature of 400—500°C.

4. A die produced by the method of any one of the preceding claims.

**Patentansprüche**

1. Verfahren zum Herstellen einer Form zum Strangpressen eines Keramischen Wabenstrukturkörpers, das die Schritte enthält, ein Gitter von Schlitzen (2') mit einer vorgegebenen Tiefe (e) in der Frontfläche der Matrix (1) der Form in einer Form auszubilden, die im wesentlichen der geometrischen Form des zu extrudierenden keramischen Wabenstrukturkörpers entspricht, und eine Mehrzahl von unabhängigen Einlässen (3) zur Zufuhr einer Keramikmasse, die mit den Schlitzen (2') in Verbindung stehen, in der rückwärtigen Oberfläche der Matrix (1) auszubilden, und einen Metallfilm (4) auf der Fläche mindestens der Schlitze (2') durch stromlose Vernickelung auszubilden, dadurch gekennzeichnet, daß die Wandstärke und der Radius der abgerundeten Ecken zwischen benachbarten Wänden des bei der Benutzung der Form zu produzierenden Körpers gewählt werden, die Schlitze durch Bearbeitung auf eine Breite (i) gebracht werden, die gleich ist der gewählten Wandstärke (i') plus dem Zweifachen des gewählten Radius, und daß die stromlose Vernickelung so durchgeführt wird, daß eine Metallschicht mit einer Dicke (t), die gleich dem gewählten Radius ist, aufgebracht wird, wobei diese Metallschicht damit die Schlitze (2') auf die gewählte Breite reduziert und den korrekten Radius an den Ecken bereitstellt.

2. Verfahren nach Anspruch 1, dadurch gekennzeichnet, daß die stromlose Vernickelung ein stromloses Überziehen mit Nickel-Phosphor-Legierung ist.

3. Verfahren nach Anspruch 2, dadurch gekennzeichnet, daß der Metallfilmüberzug bei einer Temperatur von 400 bis 500°C wärmebehandelt wird.

4. Eine durch das Verfahren nach einem der vorhergehenden Ansprüche hergestellte Form.

**Revendications**

1. Procédé de fabrication d'une matrice pour mouler par extrusion un corps à structure en nid d'abeilles en matière céramique, comportant les étapes consistant à former un réseau de fentes (2') présentant une profondeur donnée (e) dans la face antérieure de la matrice (1) suivant un profil correspondant sensiblement au profil géométrique d'un corps à structure en nid d'abeilles en matière céramique que l'on se propose de mouler par extrusion, à former dans la face postérieure de la matrice (1) une pluralité d'orifices d'alimentation indépendants (3) communiquant avec les fentes (2') et destinés à délivrer une charge de matière céramique, et à former une pellicule métallique (4) au moins sur la surface des fentes (2') par dépôt chimique de nickel, charactérisé en ce que l'on choisit l'épaisseur de paroi et le rayon des coins arrondis ménagés entre des parois adjacentes du corps à réaliser en utilisant la matrice, en ce que l'on usine les fentes à une largeur (i) égale à l'épaisseur de paroi choisie (i') augmentée du double du rayon choisi, et en ce que l'on opère le dépôt chimique de nickel de façon à déposer une couche métallique d'épaisseur (t) égale au rayon choisi, ladite couche métallique ramenant ainsi les fentes (2') à la largeur choisie et établissant le rayon correct aux coins.

2. Procédé selon la revendication 1, caractérisé en ce que ledit dépôt chimique de nickel est un dépôt chimique d'alliage nickel-phosphore.

3. Procédé selon la revendication 2, caractérisée en ce que la pellicule métallique déposée est traitée thermiquement à une température de 400 à 500°C.

4. Matrice fabriquée par le procédé selon l'une quelconque des revendications précédentes.

# Fig.1.

# Fig.2.

1

0 017 686

Fig.3.

Fig.4.

2